(19) Europäisches Patentamt
European Patent Office
Office européen des brevets

(11) Numéro de publication: **0 070 219 B1**

# (12) FASCICULE DE BREVET EUROPEEN

(45) Date de publication du fascicule du brevet: **24.10.84**

(51) Int. Cl.[3]: **A 01 N 43/54** // (A01N43/54, 41/10, 33/18)

(21) Numéro de dépôt: **82401200.9**

(22) Date de dépôt: **29.06.82**

(54) **Compositions herbicides à base de dérivés d'amino-4 chloro-6 alkylthio-5 pyrimidine et de dérivés de la dinitro-2,6 aniline et procédé de traitement des cultures à l'aide desdites compositions.**

(30) Priorité: **10.07.81 FR 8113601**

(43) Date de publication de la demande: **19.01.83 Bulletin 83/3**

(45) Mention de la délivrance du brevet: **24.10.84 Bulletin 84/43**

(84) Etats contractants désignés: **AT BE CH DE FR GB IT LI LU NL SE**

(56) Documents cités:
**EP - A - 0 000 681**
**EP - A - 0 024 260**

**R.WEGLER: "Chemie der Pflanzenschutz- und Schädlingsbekämpfungsmittel", vol. 5, 1977, Springer Verlag, Berlin (DE); pages 234-240**

(73) Titulaire: **P C U K PRODUITS CHIMIQUES UGINE KUHLMANN, Service Propriété Industrielle Tour Manhattan, F-92087 Paris La Défense 2 Cédex 21 (FR)**

(72) Inventeur: **Begon, Jean, 25, rue de la Paix Bâtiment B, F-94300 Vincennes (FR)**
Inventeur: **Boutemy, Gérard Emile Marcel, 19 Chemin des Résistants Oncy Sur Ecole, F-91490 Milly La Foret (FR)**

(74) Mandataire: **Chretien, François et al, RHONE-POULENC AGROCHIMIE Service P.I.D. 14-20 Rue Pierre Baizet, F-69009 Lyon (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention a pour objet des compositions herbicides contenant, en tant que matières actives, un dérivé d'amino-4 chloro-5 alkylthio-5 pyrimidine répondant à la formule:

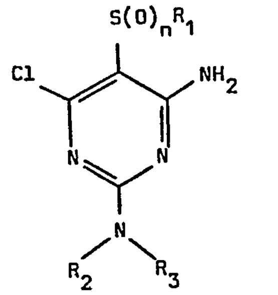

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone, et $R_3$ est un atome d'hydrogène ou un groupe alkyle ayant 1 à 5 atomes de carbone, et un dérivé de la dinitro-2,6 aniline répondant à la formule:

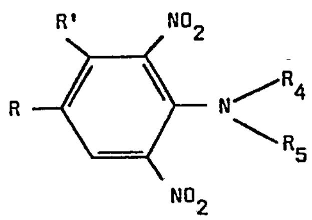

(II)

dans laquelle R est un groupe alkyle ayant 1 à 4 atomes de carbone, trifluorométhyle ou méthylsulfonyle, R' est un groupe méthyle ou amino ou un atome d'hydrogène, $R_4$ est un atome d'hydrogène ou un groupe alkyle ayant 1 à 5 atomes de carbone et $R_5$ est un groupe alkyle ayant 1 à 5 atomes de carbone, un groupe alcényle ayant 2 à 5 atomes de carbone, un groupe cyclopropylméthyle ou un groupe chloro-2 éthyle.

L'invention concerne également un procédé de destruction des mauvaises herbes dans les cultures de céréales, en particulier le blé, et dans les cultures de maïs, mettant en œuvre lesdites compositions.

Les composés de formule (I) sont des composés herbicides connus, qui ont la propriété de détruire un grand nombre de plantes adventices monocotylédones et dicotylédones dans les cultures de blé, orge, riz et maïs (cf. demandes de brevet au Japon Nos 6335/77 et 92162/77 publiées sous les Nos 92789/78 et 27580/79, et les demandes de brevet européen publiées sous les Nos 0000681 et 0024260). Les composés de formule (II) sont également des composés herbicides connus, qui sont utilisables pour la destruction des mauvaises herbes dans les cultures de coton, soja et crucifères et, dans certains cas, pour la destruction des mauvaises herbes dans le maïs.

Il a en outre été proposé d'associer certains des composés de formule (I) avec des dérivés herbicides de l'urée (cf. demande de brevet européen publiée sous le No 0013636). Mais il n'a pas été proposé jusqu'ici d'associer les composés herbicides de formule (I) aux composés herbicides de formule (II).

Comme dérivé de formule (I) utilisables dans les compositions herbicides selon l'invention, on peut citer en particulier la diamino-2,4 chloro-6 méthylthio-5 pyrimidine (composé dénommé A par la suite), l'éthylamino-2 amino-4 chloro-6 méthylthio-5 pyrimidine (composé dénommé B par la suite) et la diamino-2,4 chloro-6 méthylsulfonyl-5 pyrimidine (composé dénommé C par la suite).

Comme dérivé de formule (II) utilisable dans les compositions herbicides selon l'invention, on peut citer la N-butyl N-éthyl(dinitro-2,6 trifluorométhyl-4) aniline ou Benfluralin, la N,N-diéthyl-(dinitro-2,6 amino-3 trifluorométhyl-4) aniline ou Dinitramine, la N-éthyl N-(méthyl-2 allyl)-(dinitro-2,6 trifluorométhyl-4) aniline ou Ethalfluralin (composé dénommé D' par la suite), la N-propyl N-(chloro-2 éthyl)-(dinitro-2,6 trifluorométhyl-4) aniline ou Fluchloralin, la N,N-dipropyl(dinitro-2,6 méthylsulfonyl-4) aniline ou Nitralin, la N-propyl N-cyclopropylméthyl(dinitro-2,6 trifluorométhyl-4) aniline ou Profluralin, et plus particulièrement la N,N-dipropyl(dinitro-2,6 trifluorométhyl-4) aniline ou Trifluralin (composé dénommé A' par la suite), la N-sec.-butyl(dinitro-2,6 tert.-butyl-4) aniline ou Butralin (composé dénommé B' par la suite) et la N-(éthyl-1 propyl)-(dinitro-2,6 diméthyl-3,4) aniline ou Pendimethalin (composé dénommé C' par la suite).

Dans les compositions herbicides selon l'invention, le rapport en poids $\frac{\text{composé de formule (I)}}{\text{composé de formule (II)}}$ va de 0,4 à 1,5. Il est de préférence de 0,75 à 1,5.

Outre les matières actives précédemment citées, les compositions herbicides selon l'invention peuvent contenir les additifs inertes (diluants solides ou liquides, agents dispersants, agents mouillants, agents émulsifiants, tensio-actifs, etc.) habituellement utilisés en agriculture pour diluer les matières actives et faciliter leur mise en suspension aqueuse. De tels additifs inertes sont bien connus de l'homme de l'art. Comme diluants solides, on peut citer en particulier le talc, la silice, la kieselguhr, le kaolin, la craie, la terre de diatomées et l'argile. Comme diluants liquides, on peut citer en particulier l'eau, les huiles minérales et des solvants organiques tels que le benzène et le xylène. Comme agents dispersants, on peut citer les lignosulfonates, en particulier les lignosulfonates de sodium, et les sels de sodium des produits de condensation d'acides naphtalènesulfoniques avec le formaldéhyde, par exemple les sels de sodium des produits de condensation de l'acide naphtalènesulfonique et du formaldéhyde et les sels de sodium des produits de condensation ternaires d'acide naphtalènesulfonique, d'acide phénolsulfonique et de formaldéhyde. Comme agents mouillants, agents émulsifiants et tensio-actifs, on peut citer des composés non ioniques tels que les esters partiels d'acides gras et de sorbitan connus sous la marque de commerce Span, les produits de condensation des esters précédents avec l'oxyde d'éthylène connus sous la marque de commerce Tween, les produits de condensation d'oxyde d'éthylène et d'oxyde de propylène connus sous la marque de commerce Pluronic et les produits de condensation de l'oxyde d'éthylène avec des alkylphénols ou avec des alcools gras comme l'alcool laurique, l'alcool oléique et l'alcool cétylique, et des composés anioniques tels que les alkylsulfonates de sodium connus sous la marque de commerce Ekazol, les alkylarylsulfonates de métaux alcalins come le dodécylbenzènesulfonate de sodium et le dibutylnaphtalènesulfonate de sodium, et les sels alcalins des sulfates d'alcools gras.

Les compositions herbicides selon l'invention peuvent se présenter sous forme de granulés solides, poudres pour poudrage, poudres mouillables, suspensions aqueuses, émulsions ou solutions dans un solvant organique. Elles sont présentées de préférence sous forme de poudres mouillables contenant, outre les matières actives, un diluant solide (charge), un agent dispersant et un agent mouillant.

Pour préparer les compositions selon l'invention, on mélange intimement, suivant des procédés connus en soi, les divers constituants, c'est-à-dire les deux matières actives et éventuellement les additifs inertes, les deux matières actives étant introduites dans les proportions indiquées précédemment.

Les compositions selon l'invention présentent un effet de synergie, c'est-à-dire que leur efficacité herbicide est nettement supérieure à celle que l'on pourrait attendre à partir des résultats obtenus avec le composé de formule (I) seul et avec le composé de formule (II) seul. Un tel effet est inattendu.

Les compositions selon l'invention conviennent pour le désherbage des céréales, en particulier du blé, et pour le désherbage du maïs. Pour le désherbage des céréales et du maïs, les compositions selon l'invention peuvent être soit incorporées au sol avant les semis de la plante culture, soit pulvérisées sur le sol sous forme de bouillies aqueuses après les semis de la plante culture et en prélevée de la plante culture. La dose totale de matières actives appliquées est de 800 à 1600 g/ha dans le cas des céréales et de 1600 à 2800 g/ha dans le cas du maïs.

Les exemples suivants illustrent l'invention sans la limiter.

*Exemple 1:*

*Désherbage des cultures de blé (application de prélevée).*

Les matières actives employées sont soit le composé de formule (I) seul, soit le composé de formule (II) seul, soit des mélanges contenant le composé de formule (I) et le composé de formule (II) dans le rapport pondéral 0,4, 0,5, 0,6, 0,75, 1 ou 1,5.

Les matières actives sont formulées sous forme de poudres mouillables ayant la composition donnée dans le tableau $T_1$ (les pourcentages sont en poids). Ces poudres mouillables sont diluées dans l'eau avant emploi et les bouillies aqueuses ainsi obtenues sont pulvérisées, à raison de 400 l/ha et en prélevée de la plante culture, sur le sol où ont été effectués des semis de blé d'hiver. Les dilutions sont calculées de façon à apporter les doses de matière active indiquées dans le tableau $T_2$.

Deux mois après l'application des produits, on compare l'état des parcelles traitées à celui de parcelles témoins non traitées, lesquelles sont envahies de plantes adventices telles que la véronique *(Veronica sp.)*, la pensée *(Viola tricolor)*, le vulpin *(Alopecurus myosuroides)*, la stellaire *(Stellaria media)*, la renouée *(Polygonum sp.)* et le coquelicot *(Papaver rhoeas)*. De cette composition on déduit, d'une part, l'efficacité herbicide des produits vis-à-vis des plantes adventices et, d'autre part, le degré de phytotoxicité des produits vis-à-vis de la plante culture. L'efficacité herbicide vis-à-vis des plantes adventices est exprimée par une note de 0 à 10, 0 correspondant à une efficacité herbicide nulle et 10 à une destruction totale des plantes adventices. La phytotoxicité vis-à-vis de la plante culture est également exprimée par une note de 0 à 10, 0 correspondant à une phytotoxicité nulle (c'est-à-dire que la plante culture est aussi saine dans les parcelles traitées que dans les parcelles témoins non traitées) et 10 correspondant à une destruction totale de la plante culture. Les résultats obtenus sont rassemblés dans le tableau $T_2$.

Dans le tableau $T_2$ figurent également, dans la colonne efficacité herbicide calculée, les valeurs que l'on obtiendrait pour les compositions contenant simultanément le composé de formule (I) et le composé de formule (II) dans le cas d'une simple additivité des effets des composants. Les valeurs calculées sont obtenues à l'aide de la formule:

$$E_{XY} = E_X + E_Y - \frac{E_X \cdot E_Y}{10}$$

dans laquelle $E_X$ est l'efficacité herbicide du produit X appliqué à la dose mg/ha, $E_Y$ est l'efficacité herbicide du produit Y appliqué à la dose ng/ha et $E_{XY}$ est l'efficacité herbicide additive à laquelle on peut s'attendre lorsqu'on applique simultanément mg/ha du produit X et ng/ha du produit Y.

La comparaison des valeurs calculées et des valeurs observées montre que les compositions selon l'invention contenant un composé de formule (I) choisi parmi les composés A, B et C et un composé de formule (II) choisi parmi les composés A', B' et C' présentent un effet de synergie. L'efficacité herbicide observée pour ces compositions est supérieure à l'efficacité herbicide additive $E_{XY}$.

*Exemple 2:*

*Désherbage des cultures de maïs (application de prélevée).*

Les matières actives employées sont soit le composé de formule (I) seul, soit le composé de formule (II) seul, soit des mélanges contenant le composé de formule (I) et le composé de formule (II) dans le rapport pondéral 0,5, 0,66, 0,75, 1 ou 1,5.

Les matière actives sont formulées sous forme de poudres mouillables ayant la composition donnée dans le tableau $T_3$ (les pourcentages sont en poids). Ces poudres mouillables sont diluées dans l'eau avant emploi et les bouillies aqueuses ainsi obtenues sont pulvérisées, à raison de 400 l/ha et en prélevée de la plante culture, sur le sol où ont été effectués des semis de maïs. Les dilutions sont calculées de façon à apporter les doses de matière active indiquées dans le tableau $T_4$.

Six semaines après l'application des produits, on compare l'état des parcelles traitées à celui de parcelles témoins son traitées, lesquelles sont envahies de plantes adventices telles que le chénopode *(Chenopodium)*, l'amarante *(Amaranthus sp.)*, la renouée *(Polygonum sp.)*, le panic *(Panicum sp.)* et la morelle *(Solanum nigrum)*. De cette comparaison, on déduit l'efficacité herbicide des produits vis-à-vis des plantes adventices et leur degré de phytotoxicité vis-à-vis de la plante culture, le système de notation employé étant le même qu'à l'exemple 1. Les résultats obtenus sont rassemblés dans le tableau $T_4$.

Dans le tableau $T_4$ figure également l'efficacité herbicide calculée, évaluée suivant la méthode exposée à l'exemple 1. La comparaison des valeurs calculées et des valeurs observées montre que les compositions selon l'invention contenant un composé de formule (I) choisi parmi les composés A, B et C et un composé de formule (II) choisi parmi les composés D', B' et C' présentent un effet de synergie. L'efficacité herbicide observée pour ces compositions est supérieure à l'efficacité herbicide additive $E_{XY}$.

*Tableau $T_1$*

| Poudre mouillable | Composé de formule (I) | | Composé de formule (II) | | Agent mouillant (Pluronic ® L 92) (%) | Agent dispersant (Lignosulfonate de sodium) (%) | Charge | |
|---|---|---|---|---|---|---|---|---|
| | Nature | % | Nature | % | | | Silice précipitée (%) | Talc (%) |
| 1 | composé A | 15 | — | 0 | 1,5 | 4 | 0,5 | 79 |
| 2 | composé B | 10 | — | 0 | 1,5 | 4 | 0,5 | 84 |
| 3 | composé C | 15 | — | 0 | 1,5 | 4 | 0,5 | 79 |
| 4 | — | 0 | composé A' | 25 | 1,5 | 4 | 0,5 | 69 |
| 5 | — | 0 | composé C' | 10 | 1,5 | 4 | 0,5 | 84 |
| 6 | — | 0 | composé B' | 20 | 1,5 | 4 | 0,5 | 74 |
| 7 | composé A | 15 | composé A' | 25 | 1,5 | 4 | 0,5 | 54 |
| 8 | composé A | 15 | composé C' | 10 | 1,5 | 4 | 0,5 | 69 |
| 9 | composé A | 15 | composé B' | 20 | 1,5 | 4 | 0,5 | 59 |
| 10 | composé B | 10 | composé A' | 25 | 1,5 | 4 | 0,5 | 59 |
| 11 | composé B | 10 | composé C' | 10 | 1,5 | 4 | 0,5 | 74 |
| 12 | composé B | 10 | composé B' | 20 | 1,5 | 4 | 0,5 | 64 |
| 13 | composé C | 15 | composé A' | 25 | 1,5 | 4 | 0,5 | 54 |
| 14 | composé C | 15 | composé C' | 10 | 1,5 | 4 | 0,5 | 69 |
| 15 | composé C | 15 | composé B' | 20 | 1,5 | 4 | 0,5 | 59 |

*Tableau $T_2$*

| Poudre mouillable appliquée | Dose de matière active apportée (g/ha) | Phytotoxicité vis-à-vis de la plante culture (blé d'hiver) | Efficacité herbicide vis-à-vis des plantes adventices | |
|---|---|---|---|---|
| | | | Observée | Calculée |
| 1 | 600 (composé A) | 0 | 3,5 | — |
| 2 | 400 (composé B) | 0 | 5,5 | — |
| 3 | 600 (composé C) | 0 | 4,5 | — |
| 4 | 1000 (composé A') | 0 | 6,5 | — |
| 5 | 400 (composé C') | 0 | 6,5 | — |
| 6 | 800 (composé B') | 0 | 3 | — |
| 7 | 600 (composé A) +1000 (composé A') | 0,8 | 8 | 7,7 |
| 8 | 600 (composé A) + 400 (composé C') | 0,4 | 8,9 | 7,7 |

| Poudre *mouillable* appliquée | Dose de matière *active apportée* (g/ha) | Phytotoxicité vis-à-vis *de la plante culture* (blé d'hiver) | Efficacité herbicide vis-à-vis des plantes adventices | |
|---|---|---|---|---|
| | | | Observée | Calculée |
| 9 | 600 (composé A) + 800 (composé B') | 0,6 | 7,1 | 5,5 |
| 10 | 400 (composé B) +1000 (composé A') | 0,9 | 8,5 | 8,4 |
| 11 | 400 (composé B) + 400 (composé C') | 0,5 | 9 | 8,4 |
| 12 | 400 (composé B) + 800 (composé B') | 0,8 | 7,5 | 6,8 |
| 13 | 600 (composé C) +1000 (composé A') | 0,9 | 8,5 | 8,1 |
| 14 | 600 (composé C) + 400 (composé C') | 0,7 | 9 | 8,1 |
| 15 | 600 (composé C) + 800 (composé B') | 0,8 | 7,2 | 6,1 |

*Tableau $T_3$*

| Poudre mouillable | Composé de formule (I) | | Composé de formule (II) | | Agent mouillant (Pluronic® L 92) (%) | Agent dispersant (Lignosulfonate de sodium) (%) | Charge | |
|---|---|---|---|---|---|---|---|---|
| | Nature | % | Nature | % | | | Silice précipitée (%) | Talc (%) |
| 1 | composé A | 15 | — | 0 | 1,5 | 4 | 0,5 | 79 |
| 2 | composé B | 10 | — | 0 | 1,5 | 4 | 0,5 | 84 |
| 3 | composé C | 15 | — | 0 | 1,5 | 4 | 0,5 | 79 |
| 4 | — | 0 | composé D' | 15 | 1,5 | 4 | 0,5 | 79 |
| 5 | — | 0 | composé C' | 10 | 1,5 | 4 | 0,5 | 84 |
| 6 | — | 0 | composé B' | 20 | 1,5 | 4 | 0,5 | 74 |
| 7 | composé A | 15 | composé D' | 15 | 1,5 | 4 | 0,5 | 64 |
| 8 | composé A | 15 | composé C' | 10 | 1,5 | 4 | 0,5 | 69 |
| 9 | composé A | 15 | composé B' | 20 | 1,5 | 4 | 0,5 | 59 |
| 10 | composé B | 10 | composé D' | 15 | 1,5 | 4 | 0,5 | 69 |
| 11 | composé B | 10 | composé C' | 10 | 1,5 | 4 | 0,5 | 74 |
| 12 | composé B | 10 | composé B' | 20 | 1,5 | 4 | 0,5 | 64 |
| 13 | composé C | 15 | composé D' | 15 | 1,5 | 4 | 0,5 | 64 |
| 14 | composé C | 15 | composé C' | 10 | 1,5 | 4 | 0,5 | 69 |
| 15 | composé C | 15 | composé B' | 20 | 1,5 | 4 | 0,5 | 59 |

*Tableau $T_4$*

| Poudre mouillable appliquée | Dose de matière active apportée (g/ha) | Phytotoxicité vis-à-vis de la plante culture (maïs) | Efficacité herbicide vis-à-vis des plantes adventices | |
|---|---|---|---|---|
| | | | Observée | Calculée |
| 1 | 1200 (composé A) | 0 | 5 | — |
| 2 | 800 (composé B) | 0 | 6,2 | — |
| 3 | 1200 (composé C) | 0 | 5,5 | — |
| 4 | 1200 (composé D') | 0 | 4,4 | — |
| 5 | 800 (composé C') | 0 | 5 | — |
| 6 | 1600 (composé B') | 0 | 4 | — |

| Poudre mouillable appliquée | Dose de matière active apportée (g/ha) | Phytotoxicité vis-à-vis de la plante culture (maïs) | Efficacité herbicide vis-à-vis des plantes adventices | |
|---|---|---|---|---|
| | | | Observée | Calculée |
| 7 | 1200 (composé A) +1200 (composé D') | 0,5 | 8,5 | 7,2 |
| 8 | 1200 (composé A) + 800 (composé C') | 1,2 | 8,8 | 7,5 |
| 9 | 1200 (composé A) +1600 (composé B') | 0 | 8,2 | 7 |
| 10 | 800 (composé B) +1200 (composé D') | 0,3 | 8,8 | 7,9 |
| 11 | 800 (composé B) + 800 (composé C') | 0,7 | 8,8 | 8,1 |
| 12 | 800 (composé B) +1600 (composé B') | 0 | 8,4 | 7,7 |
| 13 | 1200 (composé C) +1200 (composé D') | 0,5 | 8,7 | 7,5 |
| 14 | 1200 (composé C) + 800 (composé C') | 0,8 | 8,9 | 7,7 |
| 15 | 1200 (composé C) +1600 (composé B') | 0 | 8,5 | 7,3 |

## Revendications

1. Compositions herbicides, caractérisées en ce qu'elles contiennent simultanément, comme matières actives, un dérivé d'amino-4 chloro-6 alkylthio-5 pyrimidine de formule:

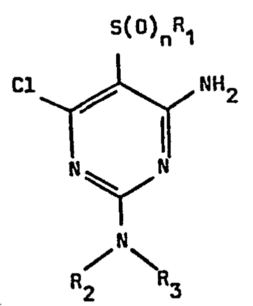

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone, et $R_3$ est un atome d'hydrogène ou un groupe alkyle ayant 1 à 5 atomes de carbone, et un dérivé de la dinitro-2,6 aniline de formule:

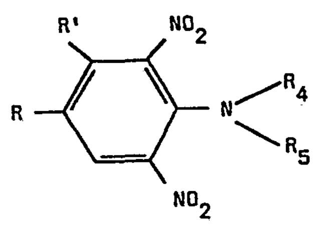

(II)

dans laquelle R est un groupe alkyle ayant 1 à 4 atomes de carbone, trifluorométhyle ou méthylsulfonyle, R' est un atome d'hydrogène ou un groupe méthyle ou amino, $R_4$ est un atome d'hydrogène ou un groupe alkyle ayant 1 à 5 atomes de carbone, et $R_5$ est un groupe alkyle ayant 1 à 5 atomes de carbone, un groupe alcényle ayant 2 à 5 atomes de carbone, un groupe cyclopropylméthyle ou un groupe chloro-2 éthyle, le rapport en poids $\frac{\text{composé de formule (I)}}{\text{composé de formule (II)}}$ dans les compositions étant de 0,4 à 1,5.

2. Compositions herbicides selon la revendication 1, caractérisées en ce que le rapport en poids $\frac{\text{composé de formule (I)}}{\text{composé de formule (II)}}$ est de 0,75 à 1,5.

3. Compositions herbicides selon l'une des revendications 1 ou 2, caractérisées en ce que le composé de formule (I) est choisi parmi la diamino-2,4 chloro-6 méthylthio-5 pyrimidine, l'éthylamino-2 amino-4 chloro-6 méthylthio-5 pyrimidine et la diamino-2,4 chloro-6 méthylsulfonyl-5 pyrimidine, et le composé de formule (II) est choisi parmi le Benfluralin, la Dinitramine, l'Ethalfluralin, le Fluchloralin, le Nitralin, le Profluralin, le Trifluralin, le Butralin et le Pendimethalin.

4. Compositions herbicides selon la revendication 3, caractérisées en ce que le composé de formule (II) est le Trifluralin, le Butralin ou le Pendimethalin.

5. Compositions herbicides selon la revendication 4, caractérisées en ce que le composé de formule (I) est la diamino-2,4 chloro-6 méthylthio-5 pyrimidine.

6. Compositions herbicides selon l'une des revendications 1 à 5, caractérisées en ce qu'elles se présentent sous forme de poudres mouillables contenant, outre les matières actives, un diluant solide, un agent dispersant et un agent mouillant.

7. Procédé de désherbage des céréales, caractérisé en ce qu'on incorpore au sol avant les semis

de la plante culture ou on pulvérise sur le sol, sous forme de bouillie aqueuse, après les semis de la plante culture et en prélevée de la plante culture, une composition telle que définie dans chacune des revendications 1 à 6, la dose totale de matières actives appliquée étant de 800 à 1600 g/ha.

8. Procédé de désherbage du maïs, caractérisé en ce qu'on incorpore au sol avant les semis de la plante culture ou on pulvérise sur le sol, sous forme de bouillie aqueuse, après les semis de la plante culture et en prélevée de la plante culture, une composition telle que définie dans chacune des revendications 1 à 6, la dose totale de matières actives appliquée étant de 1600 à 2800 g/ha.

## Claims

1. Herbicidal compositions characterized in that they simultaneously contain, as active ingredients, a derivative of 4-amino 6-chloro 5-alkylthio pyrimidine of the formula:

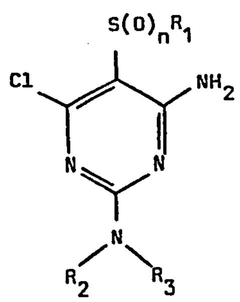

(I)

in which n is 0, 1 or 2, $R_1$ is alkyle having 1 to 5 carbon atoms, $R_2$ is hydrogen or alkyl having 1 to 5 carbon atoms and $R_3$ is hydrogen or alkyl having 1 to 5 carbon atoms, and a derivative of 2,6-dinitro aniline of the formula:

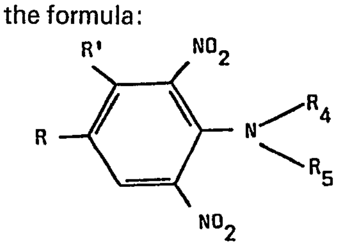

(II)

in which R is alkyl having 1 to 4 carbons, trifluoromethyl or methylsulfonyl, R' is hydrogen, methyl or amino, $R_4$ is hydrogen or alkyl having 1 to 5 carbon atoms and $R_5$ is alkyl having 1 to 5 carbon atoms, alcenyl having 2 to 5 carbon atoms, cyclopropylmethyl or 2-chloro ethyl, the weight ratio $\frac{\text{compound of formula (I)}}{\text{compound of formula (II)}}$ in the compositions being 0.4 to 1.5.

2. Herbicidal compositions according to Claim 1, characterized in that the weight ratio $\frac{\text{compound of formula (I)}}{\text{compound of formula (II)}}$ is 0.75 to 1.5.

3. Herbicidal compositions according to one of Claims 1 or 2, characterized in that the compound of formula (I) is selected from 2,4-diamino 6-chloro 5-methylthio pyrimidine, 2-ethylamino 4-amino 6-chloro 5-methylthio pyrimidine and 2,4-diamino 6-chloro 5-methylsulfonyl pyrimidine, and the compound of formula (II) is selected from Benfluralin, Dinitramine, Ethalfluralin, Fluchloralin, Nitralin, Profluralin, Trifluralin, Butralin and Pendimethalin.

4. Herbicidal compositions according to Claim 3, characterized in that the compound of formula (II) is Trifluralin, Butralin or Pendimethalin.

5. Herbicidal compositions according to Claim 4, characterized in that the compound of formula (I) is 2,4-diamino 6-chloro 5-methylthio pyrimidine.

6. Herbicidal compositions according to one of Claims 1 to 5, characterized in that they are in the form of wettable powders containings, in addition to the active ingredients, a solid diluent, a dispersing agent and a wetting agent.

7. Method for controlling weeds in cereal crops characterized by incorporating in the soil before sowing the crop plant or spraying onto the soil, in the form of an aqueous slurry, after sowing the crop plant and during the preemergence period of the crop plant, a composition as defined in one of Claims 1 to 6, wherein the total dose of the active ingredients applied is 800 to 1600 g/ha.

8. Method for controlling weeds in cereal crops characterized by incorporating in the soil before sowing the crop plant or spraying onto the soil, in the form of an aqueous slurry, after sowing the crop plant and during the preemergence period of the crop plant, a composition as defined in one of Claims 1 to 6, wherein the total dose of the active ingredients applied is 1600 to 2800 g/ha.

## Patentansprüche

1. Herbizide Mischungen, dadurch gekennzeichnet, dass sie gleichzeitig als Wirksubstanzen ein Derivat des 4-Amino-6-chlor-5-alkylthiopyrimidins der Formel:

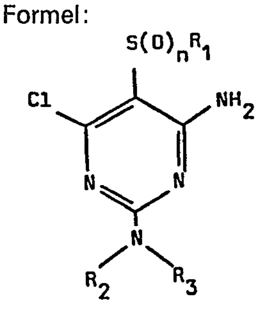

(I)

wobei n gleich 0, 1 oder 2 ist und $R_1$ eine Alkylgruppe mit 1 bis 5 Kohlenstoffatomen, $R_2$ ein Wasserstoffatom oder eine Alkylgruppe mit 1 bis 5 Kohlenstoffatomen und $R_3$ ein Wasserstoffatom oder eine Alkylgruppe mit 1 bis 5 Kohlenstoffatomen bedeuten, und ein Derivat des 2,6-Dinitroanilins der Formel:

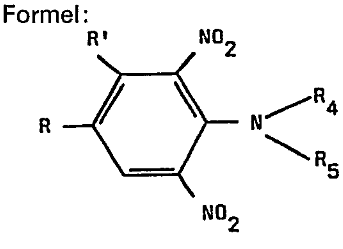

(II)

wobei R eine Alkylgruppe mit 1 bis 4 Kohlenstoffatomen, eine Trifluormethylgruppe oder eine Methylsulfonylgruppe, R' ein Wasserstoffatom oder eine Methyl- oder Aminogruppe, $R_4$ ein Wasserstoffatom oder eine Alkylgruppe mit 1 bis 5 Kohlenstoffatomen und $R_5$ eine Alkylgruppe mit 1 bis 5 Kohlenstoffatomen, eine Alkenylgruppe mit 2 bis 5 Kohlenstoffatomen, eine Cyclopropylmethylgruppe oder eine 2-Chloräthylgruppe bedeuten, enthalten, wobei das Gewichtsverhältnis $\frac{\text{Verbindung der Formel (I)}}{\text{Verbindung der Formel (II)}}$ in den Mischungen 0,4 bis 1,5 beträgt.

2. Herbizide Mischungen gemäss Anspruch 1, dadurch gekennzeichnet, dass das Gewichtsverhältnis $\frac{\text{Verbindung der formel (I)}}{\text{Verbindung der Formel (II)}}$ 0,75 bis 1,5 beträgt.

3. Herbizide Mischungen nach einem der Ansprüche 1 oder 2, dadurch gekennzeichnet, dass die Verbindung der Formel (I) ausgewählt wird aus 2,4-Diamino-6-chlor-5-methylthiopyrimidin, 2-Äthylamino-4-amino-6-chlor-5-methylthiopyrimidin und 2,4-Diamino-6-chlor-5-methylsulfonylpyrimidin, und dass die Verbindung der Formel (II) ausgewählt wird aus Benfluralin, Dinitramin, Ethalfluralin, Fluchloralin, Nitralin, Profluralin, Trifluralin, Butralin und Pendimethalin.

4. Herbizide Mischungen nach Anspruch 3, dadurch gekennzeichnet, dass die Verbindung der Formel (II) Trifluralin, Butralin oder Pendimethalin ist.

5. Herbizide Mischungen nach Anspruch 4, dadurch gekennzeichnet, dass die Verbindung der Formel (I) 2,4-Diamino-6-chlor-5-methylthiopyrimidin ist.

6. Herbizide Mischungen nach einem der Ansprüche 1 bis 5, dadurch gekennzeichnet, dass sie in Form benetzbarer Pulver vorliegen, die ausser den Wirksubstanzen noch ein festes Verdünnungsmittel, ein Dispergiermittel und ein Netzmittel enthalten.

7. Verfahren zu Unkrautvernichtung bei Getreide, dadurch gekennzeichnet, dass eine wie in einem der Ansprüche 1 bis 6 definierte Mischung vor dem Aussäen der Kulturpflanze in den Boden eingebracht oder nach dem Aussäen der Kulturpflanze und vor dem Aufgehen der Kulturpflanze in Form einer wässerigen Aufschlämmung auf dem Boden zerstäubt wird, wobei die Gesamtdosis der Angewendeten Wirksubstanzen 800 bis 1600 g/ha beträgt.

8. Verfahren zur Unkrautvernichtung bei Mais, dadurch gekennzeichnet, dass eine wie in einem der Ansprüche 1 bis 6 definierte Mischung vor dem Aussäen der Kulturpflanze in den Boden eingebracht oder nach dem Aussäen der Kulturpflanze und vor dem Aufgehen der Kulturpflanze in Form einer wässerigen Aufschlämmung auf dem Boden zerstäubt wird, wobei die Gesamtdosis der angewendeten Wirksubstanzen 1600 bis 2800 g/ha beträgt.